# EUROPEAN PATENT APPLICATION

(11) **EP 2 305 542 A1**
(43) Date of publication of application: **06.04.2011**
(21) Application number: 10251647.3
(22) Date of filing: 24.09.2010
(51) Int. Cl.: B62J 27/00, B60R 21/16

(54) **Airbag system for saddle-ride type vehicle**

(30) Priority: 30.09.2009 JP 2009226623
(71) Applicant: Honda Motor Co., Ltd., Minato-ku Tokyo 107-8556 (JP)
(72) Inventor: Yamada, Yasuto, Wako-shi Saitama 351-0193 (JP); Iijima, Satoshi, Wako-shi Saitama 351-0193 (JP)
(74) Representative: Stevens, Jason Paul

(57) **Abstract**

An airbag (30) for a saddle-ride type vehicle is divided into plural expansion chambers (31f,31r) in a longitudinal direction. The chambers have differing internal pressures when the airbag is inflated and deployed, and this can provide sufficient hardness and softness to act as a buffer between an object of collision and a rider.

The rearmost expansion chamber (31r), which the rider comes into contact with, may have a lower internal pressure than the front expansion chamber (31f). The differing internal pressures may be achieved by providing inflators of differing outputs or differently sized vent holes in each chamber, or by making the chambers of differing volume.

## Description

This invention relates to an airbag system for a saddle-ride type vehicle.

An airbag system for a saddle-ride type vehicle such as a motorcycle, which is provided with an airbag (50) which is inflated and deployed between a windscreen (9) of a vehicle and a rider, is known from JP-A No. 2007-069785.

Further, as disclosed in JP-A No. 2002-137780, an airbag system provided with plural expansion chambers (5a, 5b, 5c) is also known. To explain the airbag system using reference signs of the document, the airbag system is intended to inflate and deploy an airbag (5) laterally uniformly and in a short time, the airbag (5) is provided with separate plural expansion chambers (5a, 5b, 5c), and each expansion chamber is provided with an inflator (21).

An airbag is inflated and deployed between an object of collision and a rider, and acts as a buffer between the object of collision and the rider so as to protect the rider.

Accordingly, the airbag must have sufficient hardness and softness to act as the buffer between the object of collision and the rider.

However, the airbag disclosed in JP-A No. 2007-069785 is provided with only a single internal space, and though the airbag disclosed in JP-A No. 2002-137780 is provided with plural expansion chambers (5a, 5b, 5c), the expansion chambers are merely inflated and deployed laterally uniformly.

Accordingly, it is an object of at least the preferred embodiments of the present invention to provide an airbag system provided with both hardness and softness enough to act as a buffer between an object of collision and a rider of a saddle-ride type vehicle.

According to a first aspect of the invention, there is provided an airbag system for a saddle-ride type vehicle including an airbag to be inflated and deployed in front of a rider, **characterized in that** the inside of the airbag is divided into plural expansion chambers in a longitudinal direction of the vehicle, with differing internal pressures when the airbag is inflated and deployed.

As the inside of the airbag is divided into plural expansion chambers in the longitudinal direction of the vehicle, and the internal pressure in inflating and deploying of the expansion chambers is different, the expansion chamber having higher internal pressure can be made to function as an expansion chamber provided with enough hardness to act as a buffer between an object of collision and a rider, and at the same time, the expansion chamber having lower internal pressure can be made to function as an expansion chamber provided with enough softness to act as a buffer between the object of collision and the rider.

Thus, the airbag system can be provided with both sufficient hardness and sufficient softness to act as a buffer between the object of collision and the rider.

Preferably, the internal pressure of the rearmost expansion chamber is reduced, compared with the internal pressure of the front expansion chamber.

As a result, the front expansion chamber, which comes into contact with the object of collision, can be configured as an expansion chamber provided with sufficient hardness and contour holding capability by relatively hardening the front expansion chamber, compared with the rearmost expansion chamber which the rider comes into contact with, and at the same time, the rearmost expansion chamber which the rider comes into contact with can be configured as an expansion chamber provided with sufficient softness by relatively softening the rearmost expansion chamber, compared with the front expansion chamber which comes into contact with the object of collision.

Preferably, each of the plural expansion chambers is provided with an inflator, and the plural expansion chambers are inflated and deployed by the respective inflators, which have different outputs.

As a result, the internal pressure of the expansion chambers can be differentiated with a simple configuration, in that inflators with differing outputs are provided for the plural expansion chambers.

Preferably, vent holes of differing area are provided to the plural expansion chambers, so as to differentiate each internal pressure in inflating and deploying.

As a result, the internal pressure of the expansion chambers can be differentiated with a simple configuration, in that vent holes with openings of differing areas are provided for the plural expansion chambers.

Preferably, the plural expansion chambers have differing volumes, and inflators having the same output are provided for each expansion chamber.

As a result, the internal pressure of the expansion chambers can be differentiated without requiring inflators having different output.

The invention also extends to a saddle-ride type vehicle with an airbag system as described above.

Preferred embodiments of the invention will now be described by way of example only and with reference to the accompanying drawings, in which:
Fig. 1 is a side view showing a saddle-ride type vehicle using one embodiment of an airbag system according to the present invention;
Fig. 2 is a schematic diagram showing the vehicle viewed from the back;
Fig. 3 is a side view showing a steering unit;
Fig. 4 is a side view showing a state of the motorcycle when an airbag is inflated and deployed;
Fig. 5 is a schematic diagram showing the vehicle viewed from the back when an airbag is inflated and deployed;
Figs. 6(a) to 6(c) are explanatory drawings showing means for causing the internal pressure of the plural expansion chambers 31f, 31r to differ;
Fig. 7 is a side view showing a state of collision;
Figs. 8 is an explanatory drawing for explaining the operation of an interlocking device for interlocking the steering unit ST and the airbag 30, Fig. 8(a) is a plan view , and Fig. 8(b) shows the vehicle shown in Fig. 8(a) viewed from the back;
Fig. 9 is a plan view showing a state of collision for explaining a problem of the prior art;
Fig. 10 is a plan view showing a state of collision for explaining action by the embodiment;
Figs. 11 show a main part of the airbag system in third-angle projection, Fig. 11(a) is a plan view, Fig. 11(b) is a side view of Fig. 11(a), and Fig. 11(c) is a view from the back of the vehicle;
Fig. 12 is a sectional view showing a state in which the airbag 30 and an inflator 32 are housed in a body of a retainer;
Fig. 13 is a perspective view showing one embodiment of an airbag module;
Fig. 14(a) is a side view showing the airbag module in a closed state and Fig. 14(b) is a side view showing a state in which a lid is open;
Figs. 15 show a saddle-ride type vehicle using another embodiment, Fig. 15(a) is a side view, and Fig. 15(b) shows the vehicle viewed from the back;
Fig. 16(a) is an explanatory drawing for explaining action and Fig. 16(b) shows a comparative embodiment;
Fig. 17(a) is a side view showing a saddle-ride type vehicle using a further embodiment and Fig. 17(b) is a sectional view viewed along a line b-b shown in Fig. 17(a); and
Fig. 18(a) is a front view showing an embodiment in which a protective sheet 35 is installed, Fig. 18(b) is a side sectional view of Fig. 18(a), Fig. 18(c) is a front view showing another installation method of the protective sheet 35, and Fig. 18(d) is a side view of Fig. 18(c).

Referring to the drawings, embodiments of an airbag system of a saddle-ride type vehicle according to the invention will be described below.

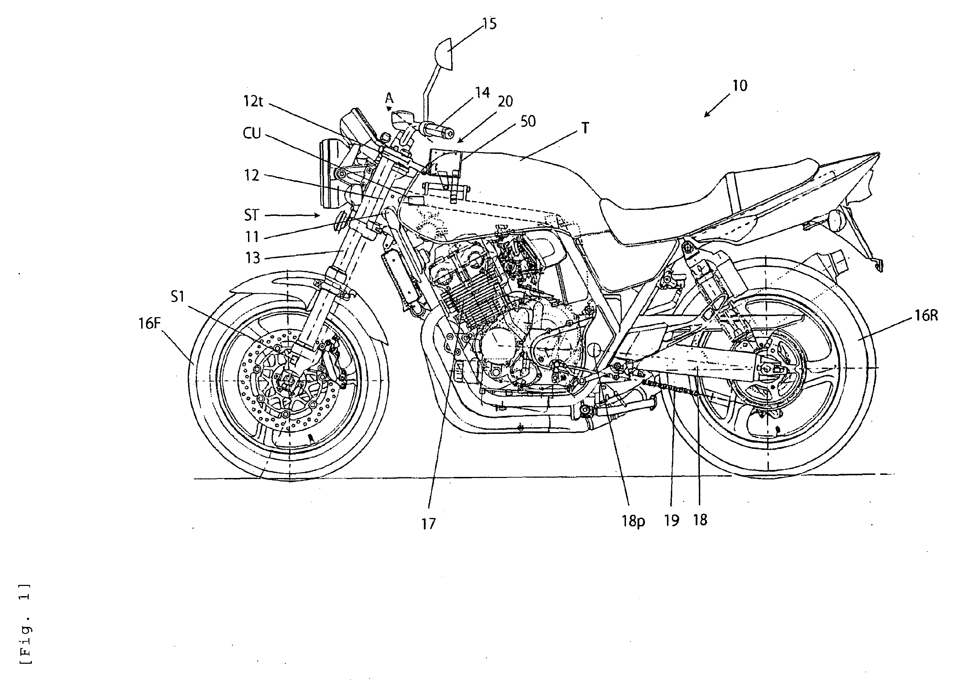

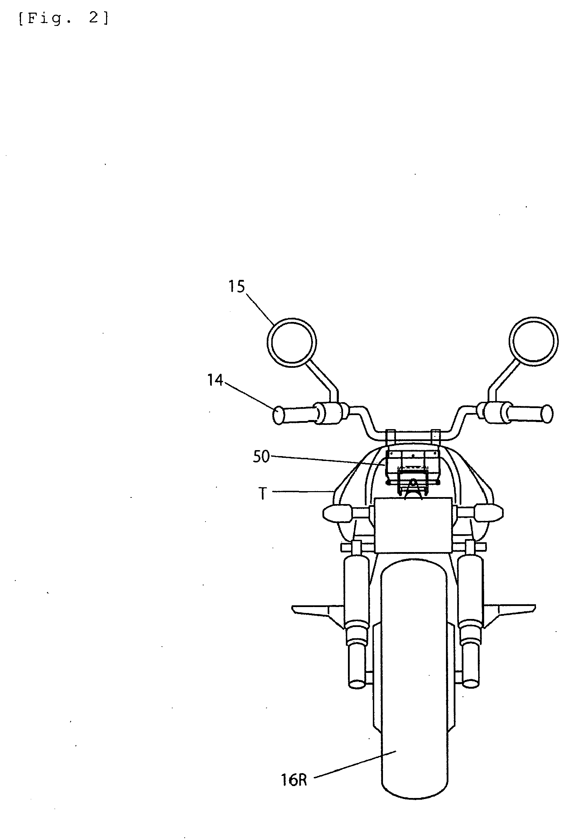

Fig. 1 is a side view showing a saddle-ride type vehicle using one embodiment of the airbag system according to the present invention. Fig. 2 shows the vehicle viewed from the back.

The vehicle 10 shown in Figs. 1 and 2 is a motorcycle, which is provided with a frame (a body frame) 11. A pair of right and left front forks 13 is steerably attached to a head pipe 12 at a front end of the body frame 11, and a handlebar 14 is attached to the upper end of the front forks 13. A rear view mirror 15 is attached to the handlebar 14. A front wheel 16F is rotatably attached to a lower end of the front fork 13. An engine 17 is fixed to the body frame 11. A swing arm 18 is vertically swingably attached to the rear of the body frame 11 via a pivot 18p and a rear wheel 16R which is a driving wheel is rotatably attached to a rear end of the swing arm 18. The rear wheel 16R is driven via a chain 19 provided between the rear wheel and the engine 17.

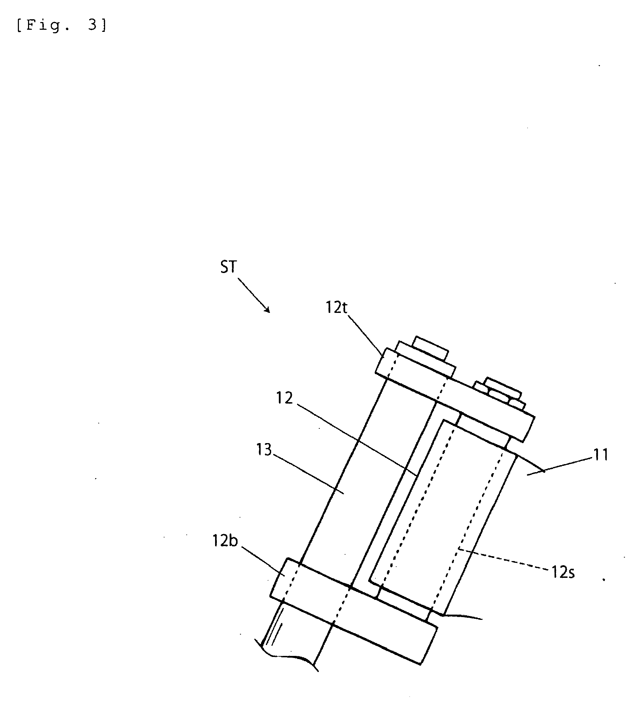

A steering unit ST in the motorcycle 10 can be configured using a well-known basic structure. The steering unit ST can be configured by rotatably supporting a stem shaft 12s by the head pipe 12 as shown in Fig. 3 for example, connecting a top bridge 12t and a bottom bridge 12b to an upper part and a lower part of the stem shaft 12s, supporting the pair of front forks 13 with the top bridge 12t and the bottom bridge 12b, rotatably attaching the front wheel 16F to the lower ends of the front forks 13 and fixing the handlebar 14 (see Fig. 1) to the top bridge 12t.

The above-mentioned steering unit ST can change a course of the motorcycle 10 clockwise or anticlockwise in plan view when a rider turns the handlebar 14.

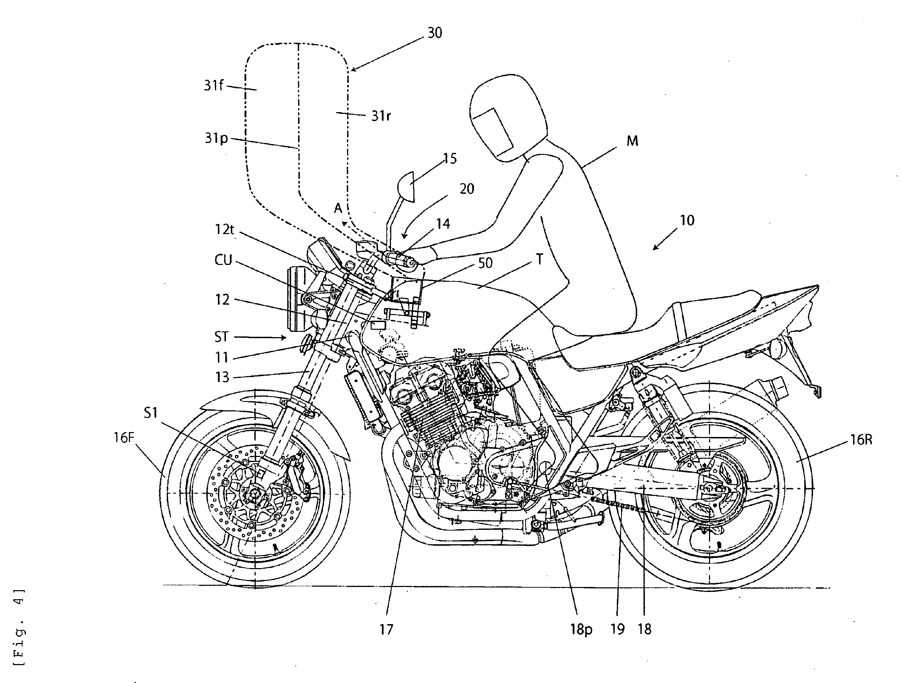

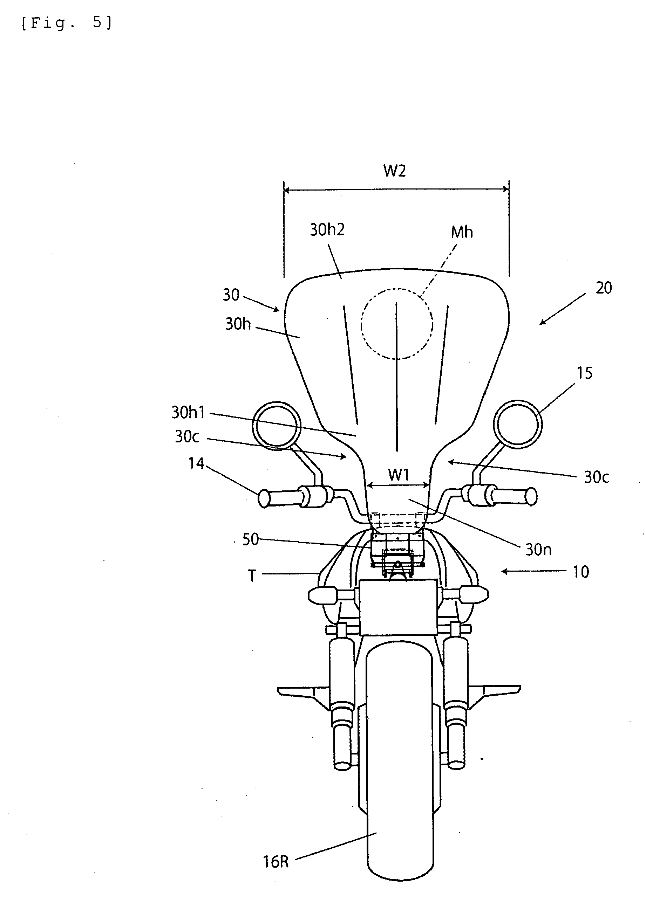

Fig. 4 is a side view of the motorcycle 10 showing a state in which an airbag is inflated and deployed and Fig. 5 shows the motorcycle viewed from the back.

As shown in Figs. 4 and 5, the airbag system 20 is mounted at the front of a fuel tank T of the motorcycle 10.

The airbag system 20 is provided with the airbag 30 which is to be inflated and deployed in front of a rider M. The inside of the airbag 30 is divided into plural expansion chambers 31f, 31r in a longitudinal direction of the vehicle 10, and the internal pressures of these expansion chambers 31f, 31r are different when the airbag is inflated and deployed. A reference sign 31 p denotes a partition that partitions the inside of the airbag 30 into the front and rear expansion chambers 31f, 31r. The airbag 30 as shown in the drawing is divided in two in the longitudinal direction; however, the airbag can be also divided into three or more chambers.

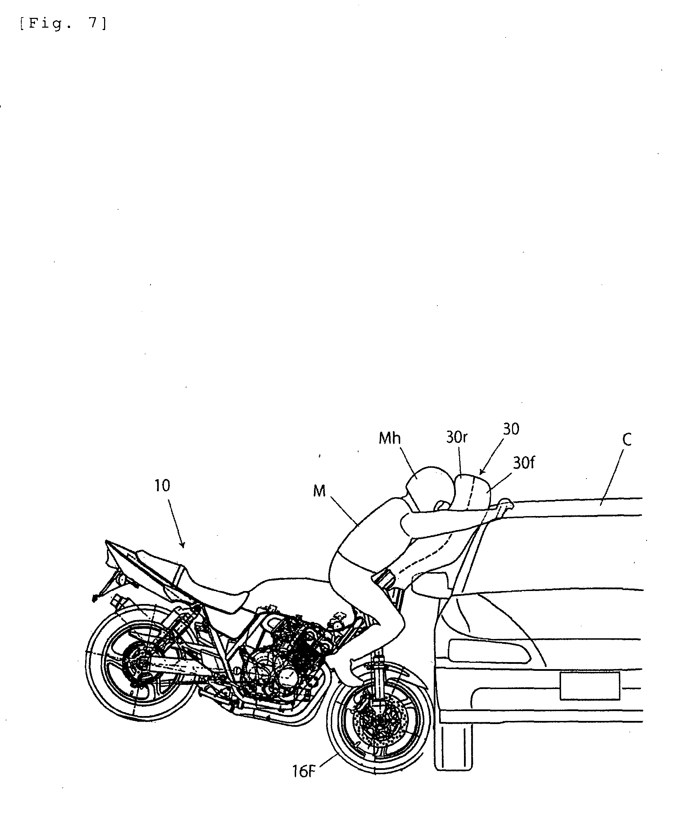

As a result, as the inside of the airbag 30 is divided into plural expansion chambers 31f, 31r in the longitudinal direction of the vehicle 10 and the internal pressure in the inflating and deploying of the expansion chambers 31f, 31r is different, one expansion chamber (for example, 31f) having a higher internal pressure can be made to function as an expansion chamber provided with enough hardness to support the airbag 30 in contact with an object of collision (for example, a vehicle C shown in Fig. 7) and at the same time, the expansion chamber (for example, 31r) having a lower internal pressure can be made to function as an expansion chamber provided with enough softness to perform a buffer action when a rider M comes into contact with it.

Thus, with the airbag system 20, both hardness and softness enough to act as a shock absorber between the object of collision C and the rider M can be acquired.

With regard to the internal pressure of the plural expansion chambers 31f, 31r, the internal pressure of the rearmost expansion chamber 31r is reduced in comparison to the internal pressure of the front expansion chamber 31f.

As a result, the front expansion chamber 31f which comes into contact with the object of collision C can be configured as an expansion chamber provided with hardness and contour holding capability suitable for coming into contact with the object of collision C by making the front expansion chamber relatively hard, compared with the rearmost expansion chamber 31r which the rider M comes into contact with. At the same time, the rearmost expansion chamber 31r which the rider M comes into contact with can be configured as an expansion chamber provided with softness suitable to being contacted by the rider M by making the rearmost expansion chamber relatively soft, compared with the front expansion chamber 31f which comes into contact with the object of collision C.

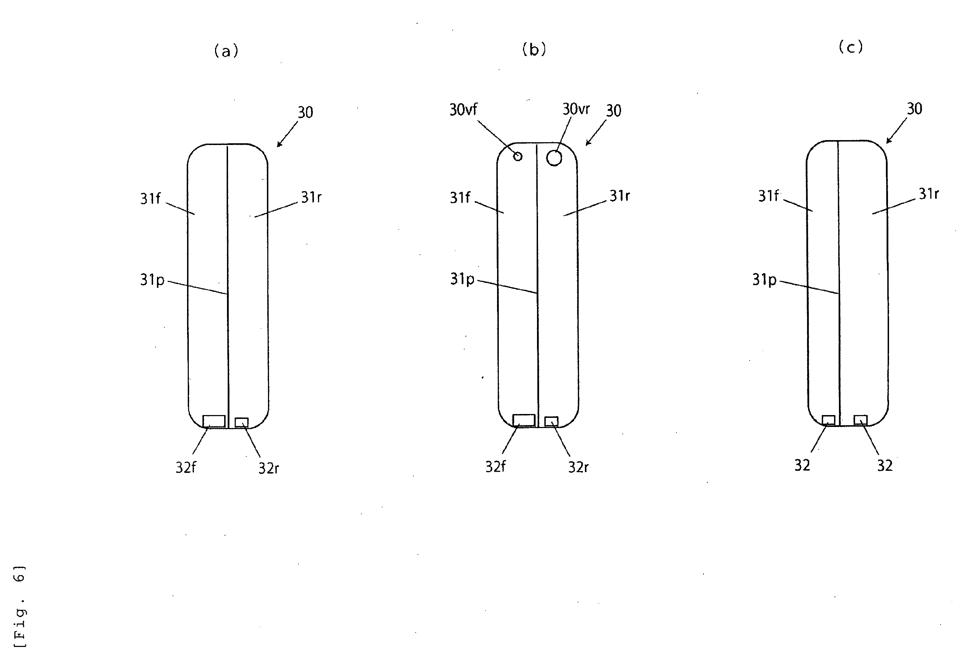

Figs. 6(a) to 6(c) are explanatory drawings showing different means making the internal pressure of the plural expansion chambers 31f, 31r different.

The internal pressure of each of the plural expansion chambers 31f, 31r can be differentiated by providing inflators 32f, 32r with differing outputs to the expansion chambers 31f, 31r as shown in Fig. 6(a), and inflating and deploying the plural expansion chambers 31f, 31r by the respective inflators 32f, 32r. In this case, the internal pressure of the rearmost expansion chamber 31r can be reduced, compared with the internal pressure of the front expansion chamber 31f, by reducing the output of the inflator 32r for inflating the rearmost expansion chamber 31r, compared with the output of the inflator 32f for inflating the front expansion chamber 31f.

As a result, the internal pressure of the expansion chambers 31f, 31r can be differentiated with a simple configuration, in that inflators 32f, 32r of different outputs are provided to the plural expansion chambers 31f, 31r.

Further, the internal pressure of the plural expansion chambers 31f, 31r can be differentiated by providing vent holes 30vf, 30vr with openings of different area in the plural expansion chambers 31f, 31r as shown in Fig. 6(b), thus varying the quantity of the relief of gas from the plural expansion chambers 31f, 31r when the airbag is inflated and deployed. In this case, the internal pressure of the rearmost expansion chamber 31r can be reduced, compared with the internal pressure of the front expansion chamber 31f, by increasing the area of the opening of the vent hole 30vr provided to the rearmost expansion chamber 31r, compared with the area of the opening of the vent hole 30vf provided to the front expansion chamber 31f.

As a result, the internal pressure of the expansion chambers 31f, 31r can be differentiated with a simple configuration, in that vent holes 30vf, 30vr of differing areas are provided to the plural expansion chambers 31f, 31r. In this case, the output of the inflators that inflate the plural expansion chambers 31f, 31r may also be similar; alternatively, the output of the inflator 32r that inflates the rearmost expansion chamber 31r can be reduced, compared with the output of the inflator 32f that inflates the front expansion chamber 31f as shown in Fig. 6(b).

Further, the internal pressure of the plural expansion chambers 31f, 31r can be differentiated by differentiating the volume of the plural expansion chambers 31f, 31r as shown in Fig. 6(c) and providing inflators 32 having the same output to each expansion chamber 31f, 31r. In this case, the internal pressure of the rearmost expansion chamber 31r can be reduced, compared with the internal pressure of the front expansion chamber 31f, by increasing the volume of the rearmost expansion chamber 31r, compared with the volume of the front expansion chamber 31f.

As a result, the internal pressure of the expansion chambers 31f, 31r can be differentiated without the need to use inflators of differing output.

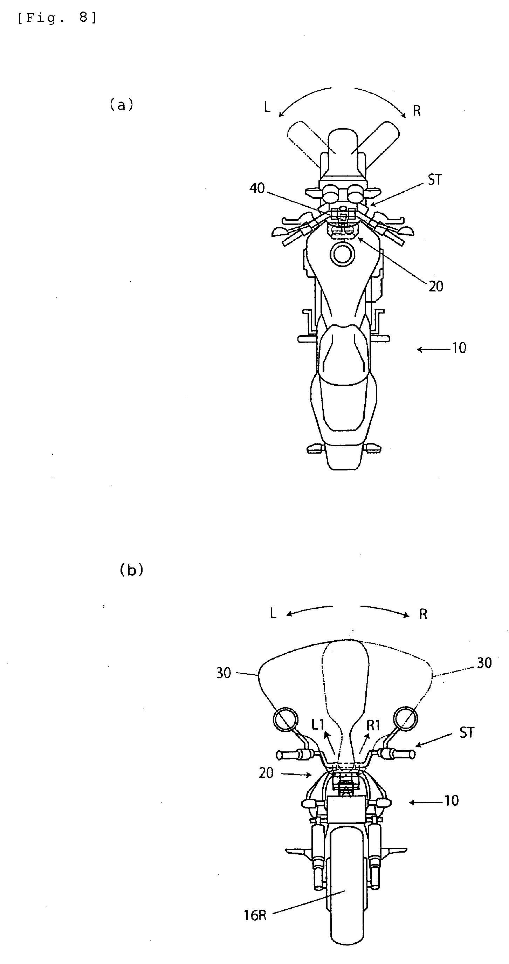

As shown in Fig. 8(a), the airbag system 20 is provided with an interlocking device 40 between the steering unit ST and the airbag 30. A specific example of the arrangement of the interlocking device 40 will be described later.

The interlocking device 40 is a device for determining a direction of the inflating and deploying of the airbag 30 according to a state of the steering unit ST in collision with a vehicle (more precisely, immediately after collision), that is, in the inflating and deploying of the airbag 30.

Specifically, the interlocking device 40 directs the airbag 30 anticlockwise L as shown by a full line in Fig. 8(b) in a view from the back of the vehicle 10, and inflates and deploys the airbag (the direction of inflating and deploying is shown by an arrow L1) when the steering unit ST directs the vehicle 10 clockwise in a plan view, that is, when the steering unit ST is turned clockwise R as shown by a full line in Fig. 8(a), in the inflating and deploying of the airbag 30. Further, the interlocking device directs the airbag 30 clockwise R as shown by a dotted line in Fig. 8(b) in the view from the back of the vehicle and inflates and deploys the airbag (the direction of inflating and deploying is shown by an arrow R1) when the steering unit ST directs the vehicle 10 anticlockwise L as shown by a dotted line in Fig. 8(a) in a plan view, that is, the steering unit ST is turned anticlockwise L, in the inflating and deploying of the airbag 30.

As a result, the following actions and effects are acquired.

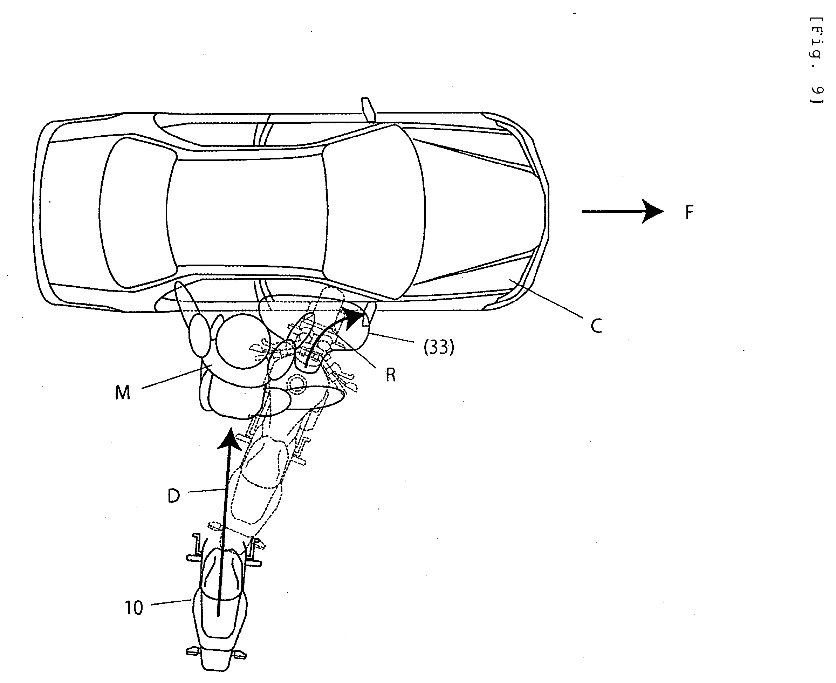

When the saddle-ride type vehicle 10 collides with the side of a moving vehicle C as shown in Fig. 7, ordinarily, the front wheel 16F of the saddle-ride type vehicle 10 is made to turn in a travelling direction F of the vehicle C as shown in Fig. 9. Accordingly, the steering unit ST is also turned in the same direction (in a direction shown by an arrow R in Fig. 9) (see Fig. 8(a)). At the same time, the saddle-ride type vehicle 10 itself is also turned in the travelling direction of the vehicle C (a state in which yawing is caused and the vehicle 10 is moved by the vehicle C). That is, the saddle-ride type vehicle 10 is laterally moved in the travelling direction of the vehicle C due to the collision with the vehicle C, even though the direction of motion of the saddle-ride type vehicle before the collision is D.

However, because of his or her inertia, the rider M of the saddle-ride type vehicle 10 continues to move in the direction of motion D, without being laterally moved, and comes to collide with the side of the vehicle C.

Accordingly, if no measures are taken, the existing airbag (33) is inflated and deployed in the travelling direction (R) of the saddle-ride type vehicle 10 as shown in Fig. 9, and thus the airbag fails to cushion the impact of the rider M with the vehicle C because the rider M and the vehicle 10 move in differing directions.

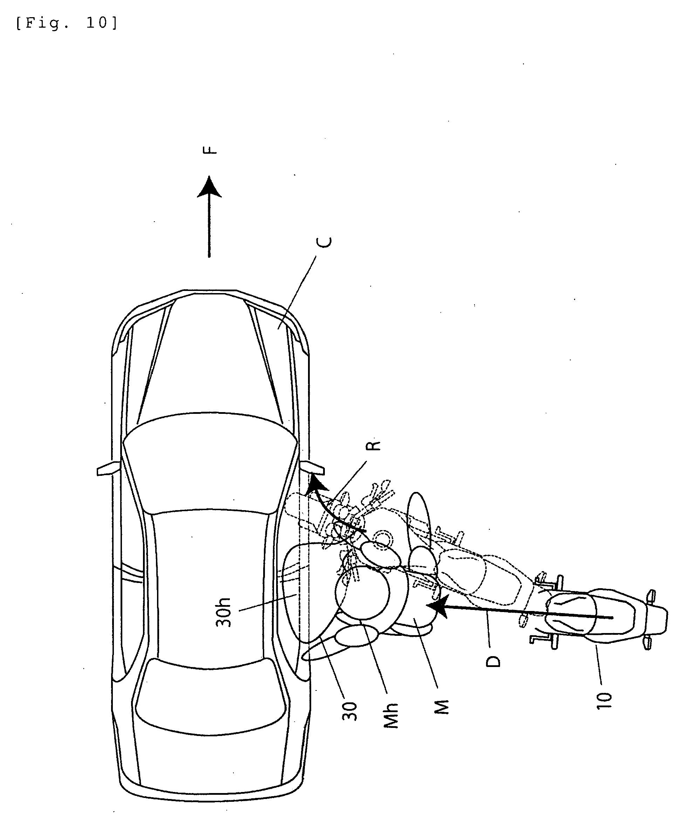

However, according to the airbag system 20 in this embodiment, as shown in Figs. 8, if the steering unit ST of the saddle-ride type vehicle 10 moves clockwise R in a plan view immediately after collision, that is, when the airbag 30 is inflated and deployed, the airbag 30 is directed anticlockwise L in a view from the back of the saddle-ride type vehicle 20 and is inflated and deployed upward (in the direction shown by the arrow L1) from the vehicle 10 by the operation of the interlocking device 40. The inflated and deployed position is then matched with the direction of motion of the rider M according to inertia (see Fig. 10).

Figs. 9 and 10 show a state in which the vehicle C advances rightward in a plan view. Correspondingly, if the saddle-ride type vehicle 10 is in collision with a vehicle C advancing leftward, the steering unit ST is turned leftward L. Then, when the steering unit ST of the saddle-ride type vehicle 10 is turned anticlockwise L as shown in Figs. 8 in a plan view in the inflating and deploying of the airbag 30 immediately after collision, the airbag 30 is directed clockwise R in the view from the back of the saddle-ride type vehicle 10 by the operation of the interlocking device 40 and is inflated and deployed upward (in the direction shown by the arrow R1) from the vehicle 10. The inflated and deployed position is then still matched with the direction of motion of the rider M according to inertia.

Accordingly, with the airbag system 20, even if the saddle-ride type vehicle 10 collides with the side of a moving vehicle C, the airbag 30 can fully fulfil its role.

Figs. 9 and 10 both show a state in which the travelling direction D of the saddle-ride type vehicle 10 is slightly inclined to the travelling direction F of the vehicle C. However, even if the travelling direction D of the saddle-ride type vehicle 10 is perpendicular to the travelling direction F of the vehicle C, a similar phenomenon occurs. Further, when the travelling direction D of the saddle-ride type vehicle 10 is inclined to a collision surface of an object of collision, even if the object of collision such as the vehicle C is stationary, the turning of the steering unit ST also occurs.

Accordingly, in such a case, the airbag 30 of the airbag system 20 can also sufficiently fulfil its role.

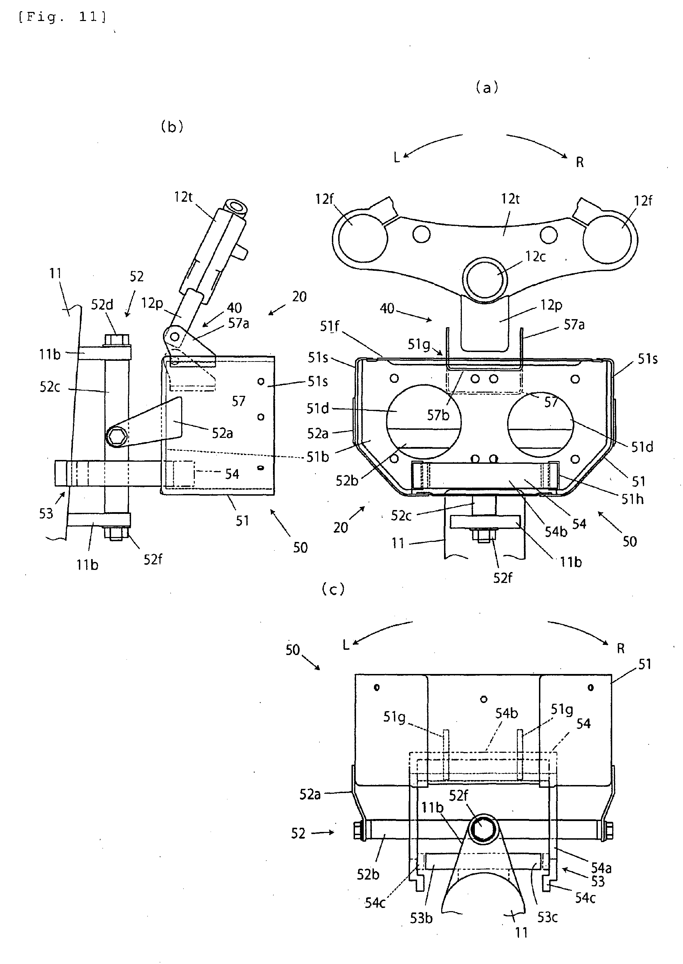

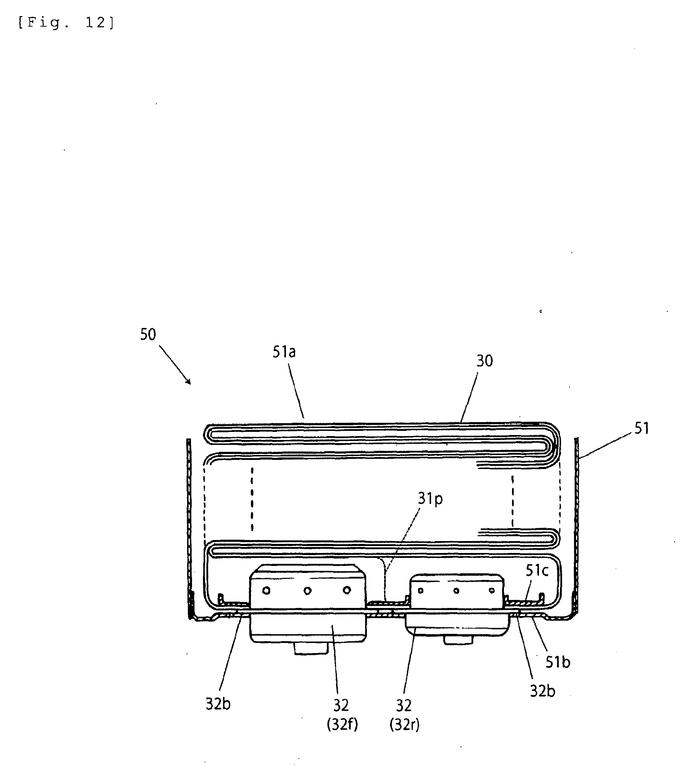

Figs. 11 show a main part of the airbag system 20 in third-angle projection. Fig. 11(a) is a plan view, Fig. 11(b) is a side view of Fig. 11(a), and Fig. 11(c) is a view from the back of the vehicle of Fig. 11(a). Fig. 12 is a sectional view showing a state in which the airbag 30 and an inflator 32 are housed in a body of a retainer.

The airbag system 20 includes the airbag 30, the retainer 50 that houses the airbag 30, and the interlocking device 40.

The retainer 50 includes the box-type body 51 of the retainer, a supporting mechanism 52 that attaches the body 51 of the retainer to the vehicle 10 so that it is rotatable clockwise R and anticlockwise L in the view from the back of the vehicle 10 as shown in Fig. 11(c), and,a locking mechanism 53 that locks the turning of the body 51 of the retainer by the supporting mechanism 52.

The body 51 of the retainer is a case provided with an opening 51a (see Fig. 12) for inflating and deploying the airbag on the upper side, and an installation hole 51d for attaching the inflator 32 is provided in a bottom plate 51b. As shown in Fig. 12, the inflator 32 is fixed to the body 51 of the retainer by fixing its flange 32b with a keep plate 51c.

As shown in Fig. 12, the airbag 30 is housed integrally with the inflator 32 in a state in which the airbag is folded in the body 51 of the retainer.

As shown in Fig. 1, a shock sensor S1 is installed in the right and left front forks 13 and a control unit CU is mounted in front of the retainer 50. The shock sensor S1 is electrically connected to the control unit CU, and the control unit CU is electrically connected to the inflator 32. When a collision occurs, the shock sensor S1 transmits detected deceleration data to the control unit CU and the control unit CU judges whether the airbag 30 should be operated or not based upon the deceleration data. When the control unit judges that the airbag should be operated, it feeds current for ignition to the inflator 32 so as to operate the inflator 32 and generate gas in the airbag 30, and inflates and deploys the airbag 30.

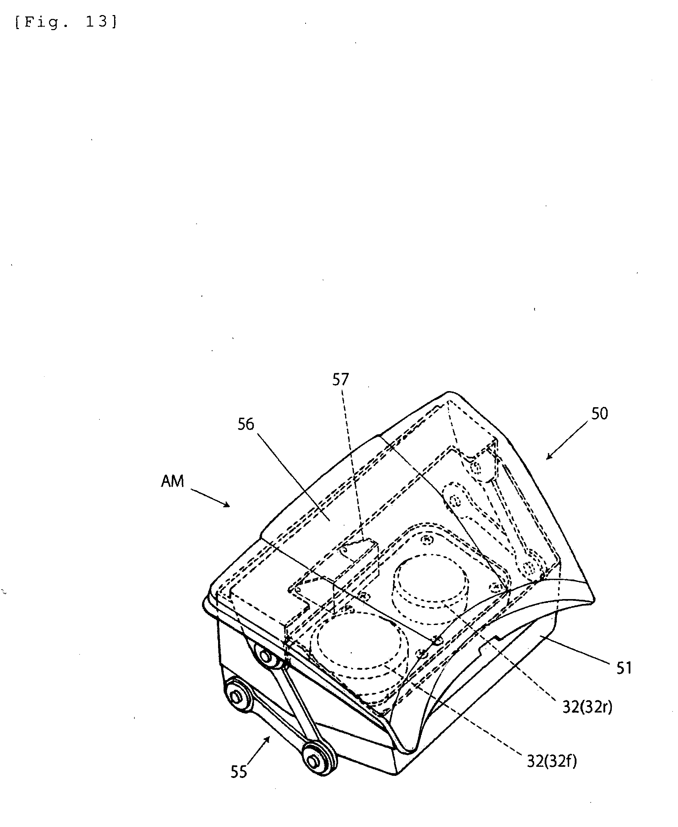

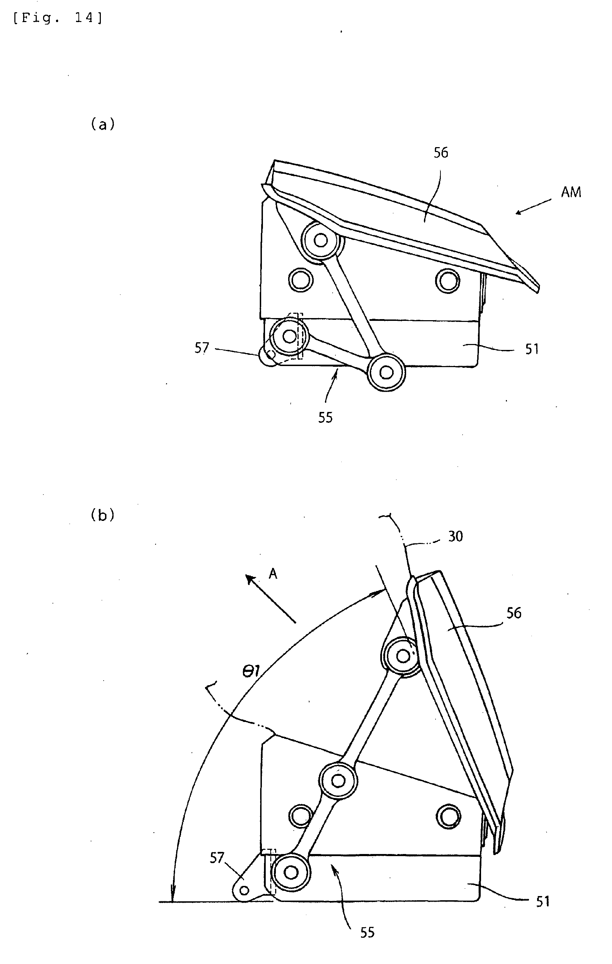

The body 51 of the retainer can be configured as an airbag module AM provided with a lid 56 equipped with a link 55 shown in Figs. 13 and 14. When the airbag system 20 is not operated, the lid 56 is closed as shown in Figs. 13 and 14(a). However, when the airbag 30 is inflated by the operation of the inflator 32, the lid 56 is forced to open as shown in Fig. 14(b) by the pressure, and the airbag 30 is inflated and deployed forward and upward as shown by an arrow A. At that time, an opening angle θ1 of the lid 56 is defined by the extension of the link 55 as shown in Fig. 14(b), and thus an inflation/deployment angle of the airbag 30 is defined. The inflated and deployed airbag 30 receives the rider M and protects the rider M by effectively absorbing the kinetic energy of the rider, exhausting gas from an exhaust hole (see 30vf, 30vr in Fig. 6(b)) and deflating.

The contours of the body 51 of the retainer shown in Figs. 11 and the contours of the body 51 of the retainer shown in Figs. 13 and 14 are different. Any suitable contour can be used.

The inflators 32f, 32r of differing output which are shown in Fig. 6 can be arranged in the direction of width of the vehicle as shown in Fig. 12. In this case, the partition 31 p shown by broken lines in Fig. 12 is arranged in the twisted state at 90 degrees in the body 51 of the retainer, for example.

As shown in Figs. 11, the supporting mechanism 52 of the body 51 of the retainer is provided with right and left arms 52a projecting downwardly from right and left side boards of the body 51 of the retainer, a rod 52b that couples the right and left arms 52a, a pipe 52c fixed integrally with the rod 52b with the pipe 52c perpendicular to the rod 52b, a pair of brackets 11b provided to the body frame 11, and a bolt 52d and a nut 52f that rotatably support the pipe 52c inside each bracket 11b. The bolt 52d is inserted into the pipe 52c and the nut 52f is connected to its end. The pipe 52c extends in a longitudinal direction of the vehicle 10, and can be turned around the bolt 52d. The body 51 of the retainer, the arms 52a and the rod 52b are turned integrally with the pipe 52c. Accordingly, the body 51 of the retainer can be turned clockwise R and anticlockwise L in the view from the back of the vehicle 10 relative to the vehicle 10 as shown in Fig. 11(c).

The locking mechanism 53 is provided to prevent the turning of the body 51 of the retainer by the supporting mechanism 52 when the airbag system 20 is not operated.

The locking mechanism 53 is provided with a regulating body 53b provided on the body of the vehicle and a regulated body 54 provided on the body 51 of the retainer.

The regulating body 53b includes a regulating block fixed to the body frame 11, and both of its ends 53c form a regulating part that can contact the regulated body 54.

The regulated body 54 is configured as a U-shaped plate member in the view from the back as shown in Fig. 11(c). The regulated body 54 is provided with a pair of arms 54a projecting toward the regulating body 53b and a base 54b that couples the upper parts of these arms 54a in the body 51 of the retainer. The arms 54a project downwards from the body 51 of the retainer, and pass through holes 51h formed in the bottom plate 51b of the body 51 of the retainer.

A well-known temporary fastening means (not shown) for preventing the protrusion of the regulated body 54 when the airbag system 20 is not operated is provided between the body 51 of the retainer and the regulated body 54. As a result, the regulated body 54 is temporarily held in a position in which the ends 54c of the arms 54a of the regulated body 54 are opposite to a regulating part 53c of the regulating body 53b, as shown by a dotted line in Figs. 11, when the airbag system 20 is not operated. In this state, as the ends 54c of the arms 54a of the regulated body 54 contact the regulating part 53c of the regulating body 53b if the body 51 of the retainer tries to turn around the pipe 52c, the rotation of the body 51 of the retainer is prevented.

When the airbag system 20 is operated, the inflator 32 is operated as described above and the airbag 30 is inflated and deployed upward (more precisely, upward and forward) from the opening 51a of the body 51 of the retainer. Further, force in a direction in which the regulated body 54 is protruded from the body 51 of the retainer acts on the regulated body 54, as a result of the rise of pressure in the body 51 of the retainer and the inflating of the airbag 30 at this time. The temporary holding of the regulated body 54 by the temporary fastening means is released by this force and the regulated body 54 protrudes into the state as shown by full lines in Figs. 11. The locked state, in which the ends 54c of the arms 54a of the regulated body 54 and the regulating part 53c of the regulating body 53b are opposite each other, is released by the protrusion, and the body 51 of the retainer can be turned around the pipe 52c.

As shown in Figs. 11, the interlocking device 40 is provided with an operating part 12p provided on the steering unit ST and an engaging part 57 which is provided on the retainer 50 and can be engaged with the operating part 12p.

The operating part 12p is configured as a projecting portion provided on a top bridge 12t forming a part of the steering unit ST. In Fig. 11(a), a reference sign 12f denotes a hole in which the front fork 13 is fitted and 12c denotes a hole in which the stem shaft 12s is fitted.

The engaging part 57 is formed by an engaging member made of a U-shaped plate in plan view as shown in Fig. 11(a). The engaging member 57 is provided with a pair of arms 57a extended toward the operating part 12p and a base 57b that couples the bases of these arms 57a in the body 51 of the retainer. The engaging member 57 is attached to the body 51 of the retainer by inserting the arms 57a into holes 51g provided in a front plate 51f of the body 51 of the retainer. The arms 57a can project forwardly from the body 51 of the retainer.

A well-known temporary fastening means (not shown) for preventing the protrusion of the engaging member 57 when the airbag system 20 is not operated is provided between the body 51 of the retainer and the engaging member 57. The engaging member 57 is thereby temporarily held in a position in which the arms 57a of the engaging member 57 are not fitted to the operating part 12p as shown by dotted lines in Figs. 11 when the airbag system 20 is not operated. In this state, as the arms 57a of the engaging member 57 do not engage with the operating part 12p even if the steering unit ST and thus the operating part 12p is turned, the body 51 of the retainer is not turned.

When the airbag system 20 is operated, the inflator 32 is operated as described above and the airbag 30 is inflated and deployed upward from the opening 51a of the body 51 of the retainer. A force in a direction in which the engaging member is protruded from the body 51 of the retainer acts on the engaging member 57 as a result of the rise of pressure in the body 51 of the retainer and the inflation of the airbag 30 at this time. The temporary holding of the engaging member 57 by the temporary fastening means is released by this force, and the engaging member 57 is made to protrude as shown by full lines in Figs. 11. The arms 57a of the engaging member 57 can engage with the operating part 12p as a result of this protrusion, and the body 51 of the retainer can be rotated around the pipe 52c in interlock with the turning of the steering unit ST.

Thus, the interlocking device 40 directs the airbag 30 anticlockwise L as shown in Fig. 8(b) in the view from the back of the vehicle and inflates and deploys the airbag by turning the retainer (the body 51 in this case) anticlockwise L as shown in Fig. 11(c) in the view from the back of the vehicle if the steering unit ST directs the vehicle 10 clockwise R as shown in Fig. 8(a) and Fig. 11(a) in plan view when the airbag 30 is inflated and deployed. Further, if the steering unit ST directs the vehicle 10 anticlockwise L as shown in Figs. 8(a) and 11(a) in plan view when the airbag is inflated and deployed, the interlocking device directs the airbag 30 clockwise R as shown in Fig. 8(b) in the view from the back of the vehicle 10 by turning the body 51 of the retainer clockwise R as shown in Fig. 11(c) in the view from the back of the vehicle and inflates and deploys the airbag.

According to the above-mentioned interlocking device 40, a position in which the airbag 30 is inflated and deployed can be securely matched with the moving direction D of the rider M with a simple configuration (see Fig. 10).

Besides, as the interlocking device 40 is configured by the operating part 12p provided on the steering unit ST and the engaging part 57 which is provided on the retainer 50 and which engages with the operating part 12p, the position in which the airbag 30 is inflated and deployed can be matched with the moving direction D of the rider M with simpler configuration.

Further, as the engaging part 57 is only protruded toward the operating part 12p to engage therewith when the airbag 30 is inflated and deployed, the steering unit ST and the retainer 50 of the airbag 30 are interlocked only when required. Accordingly, an unnecessary motion of the retainer 50 can be prevented.

Furthermore, as the engaging part 57 is protruded toward the operating part 12p by internal pressure in the body 51 of the retainer raised when the airbag 30 is inflated and deployed, the engaging part 57 can be protruded utilizing the inflation and deployment of the airbag 30. Accordingly, there is no need for means for protruding the engaging part 57 to be separately prepared, and the increase of the number of parts can be inhibited.

Furthermore, as the operating part 12p is configured as a projecting portion provided on the top bridge 12t forming a part of the steering unit ST, the projecting portion has only to be provided on the top bridge 12t, and intricate working for the operating part is not required.

As shown in Figs. 4 and 5, the airbag 30 in this embodiment is provided with a part opposite to the head 30h, which is opposite to the head Mh of the rider M when the airbag is inflated and deployed, and a neck part 30n which rises upward from the vehicle 10 and toward the part opposite to the head 30h. The width W1 of the neck part is less than the width W2 of the part opposite to the head 30h. Further, the neck part has neckings 30c curved inside in the direction of vehicle width.

As a result, the neck part 30n and the part opposite to the head 30h of the airbag 30 are inflated and deployed as shown in Fig. 5, with the neck part 30n having the neckings 30c avoiding interference from the vehicle 10. Therefore, even if the saddle-ride type vehicle 10 collides with the side of the moving vehicle C and is turned in the travelling direction of the vehicle C as shown in Fig. 10, the airbag 30 is inflated and deployed in substantially the same direction as the travelling direction D before the collision.

The airbag 30 is inflated and deployed immediately after the collision. Normally, the saddle-ride type vehicle 10 is turned in the same direction as the vehicle C immediately after the collision, and the rider M continues to move in the travelling direction D before the collision, and so collides with the side of the vehicle C. However, at that time, the neck part 30n having the neckings 30c can avoid interference from the vehicle 10 thanks to the neckings 30c. Even if the saddle-ride type vehicle 10 is laterally moved, in Fig. 5 for example, the vehicle body (the handlebar 14 in Fig. 5) hardly contacts the neck part 30n owing to the existence of the neckings 30c. As a result, the airbag 30 is hardly moved even though the vehicle 10 is moved.

Therefore, a position of the part opposite to the head 30h in the inflated and deployed airbag 30 is more securely matched with the moving direction D of the rider M according to inertia as shown in Fig. 10, combined with the operation of the interlocking device 40.

Accordingly, even if the vehicle collides with the side of a moving vehicle C, the airbag 30 can fully fulfil its role.

As shown in Figs. 4 and 5, the airbag 30 and the handlebar 14 are configured so that the part opposite to the head 30h is located on the upper side of the handlebar 14 provided to the vehicle in inflating and deploying because the neck part 30n rises.

As a result, the airbag 30 can more securely avoid interference from the vehicle, particularly from the handlebar 14 and is hardly moved even when the vehicle 10 is moved. Therefore, the position of the part opposite to the head 30h is more easily matched with the moving direction D of the rider M.

As shown in Fig. 5, an upper part 30h2 of the part opposite to the head 30h is made wider in the direction of vehicle width in inflating and deploying than a lower part 30h1. The whole airbag 30 including the neck part 30n is thus fan-shaped.

As a result, the airbag 30 can more securely avoid interference from the vehicle 10 and is hardly moved even though the vehicle 10 is moved. Therefore, the position of the part opposite to the head 30h is more easily matched with the moving direction D of the rider M. As the lower part 30h1 of the part opposite to the head 30h is made narrower than the upper part 30h2, the compactness of the whole airbag 30 is promoted in addition to compactness by the making of the neckings 30c and at the same time, a rider protecting function can be enhanced by making the upper part 30h2 of the part opposite to the head 30h relatively wider.

As shown in Fig. 4, the part opposite to the head 30h is located in front of the handlebar 14 when the airbag is inflated and deployed.

As a result, the airbag 30 can more securely avoid interference from the vehicle, particularly from the handlebar 14, and is hardly moved even though the vehicle is moved. Therefore, the position of the part opposite to the head 30h is more easily matched with the moving direction of the rider.

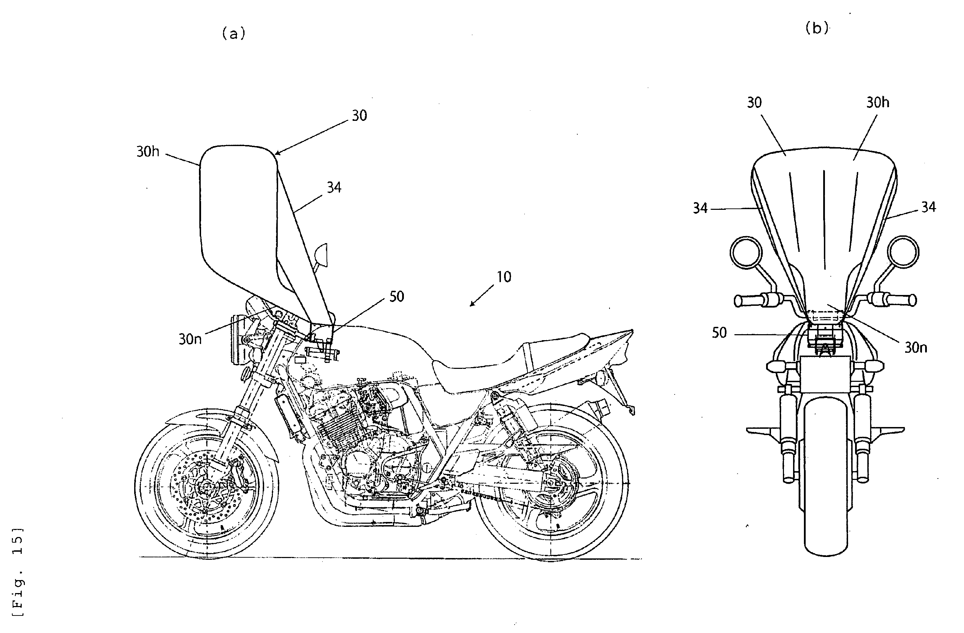

Figs. 15 show a saddle-ride type vehicle with another form of airbag. Fig. 15(a) is a side view, and Fig. 15(b) shows the vehicle viewed from the back.

This embodiment of the airbag is different from the above-mentioned embodiment, in that a pair of right and left mooring bodies 34 are provided. These mooring bodies 34 couple a part opposite to the head 30h and the vehicle 10, separately from a neck part 30n, and moor the part opposite to the head 30h when the airbag is inflated and deployed are provided.

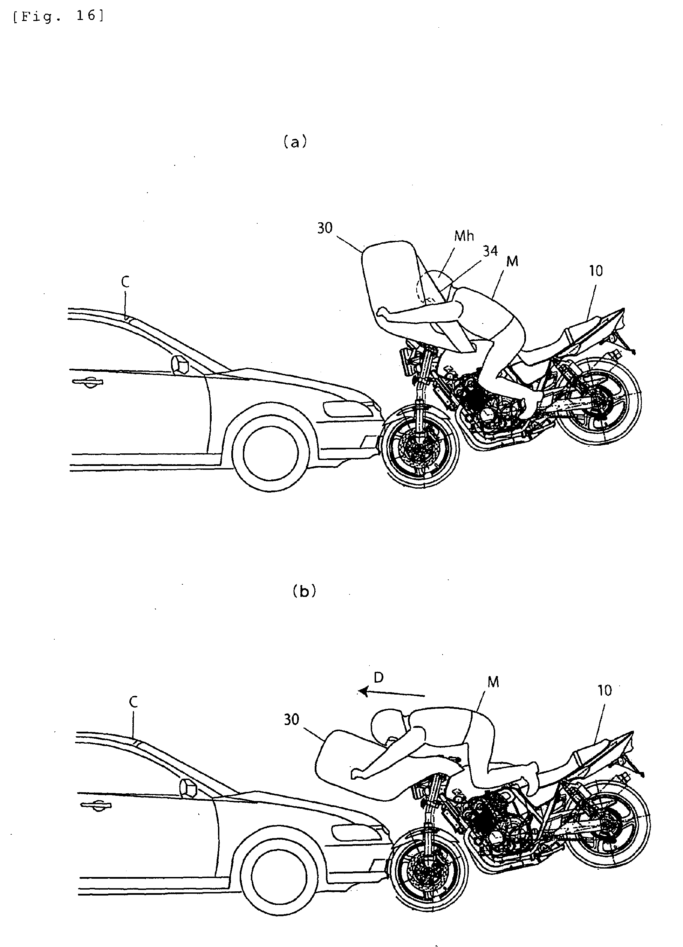

As a result, even if no material body for supporting an airbag 30 (for example, no surface of a vehicle C) exists immediately in front of the airbag 30 as inflated and deployed, as shown in Fig. 16(a) for example, the airbag 30 receives a rider M and can absorb a part of rider's kinetic energy. If the mooring body 34 is not provided, the airbag 30 is less able to receive the rider M when no material body for supporting the airbag 30 (for example, no surface of the vehicle C) exists immediately in front of the airbag 30 as inflated and deployed, as shown in Fig. 16(b) for example.

The airbag 30 receives the rider M as shown in Fig. 16(a) for example by providing the mooring body 34 and can absorb a part of the rider's kinetic energy.

The mooring body 34 is coupled to the above-mentioned airbag module AM. For example, the mooring body can be directly fixed to an inner face of a side 51s of the body 51 of the retainer shown in Figs. 11 for example. The mooring body 34 can be housed together with the airbag 30, with the mooring body folded in the body 51 of the retainer.

When the mooring body 34 is coupled not to a body of the vehicle 10 (for example, a body frame 11), but to the airbag module AM as described above, a degree of freedom in the design of the other body parts (for example the body frame 11) is enhanced, compared with the case where the mooring body 34 is coupled to the body of the vehicle 10.

The pair of right and left mooring bodies 34 are coupled to both the right and left sides of the part of the airbag 30 opposite to the head 30h.

As a result, even if no material body for supporting the airbag 30 (for example, no surface of the vehicle C) exists immediately in front of the airbag 30 as inflated and deployed, the airbag 30 receives the rider M and can absorb a part of rider's kinetic energy.

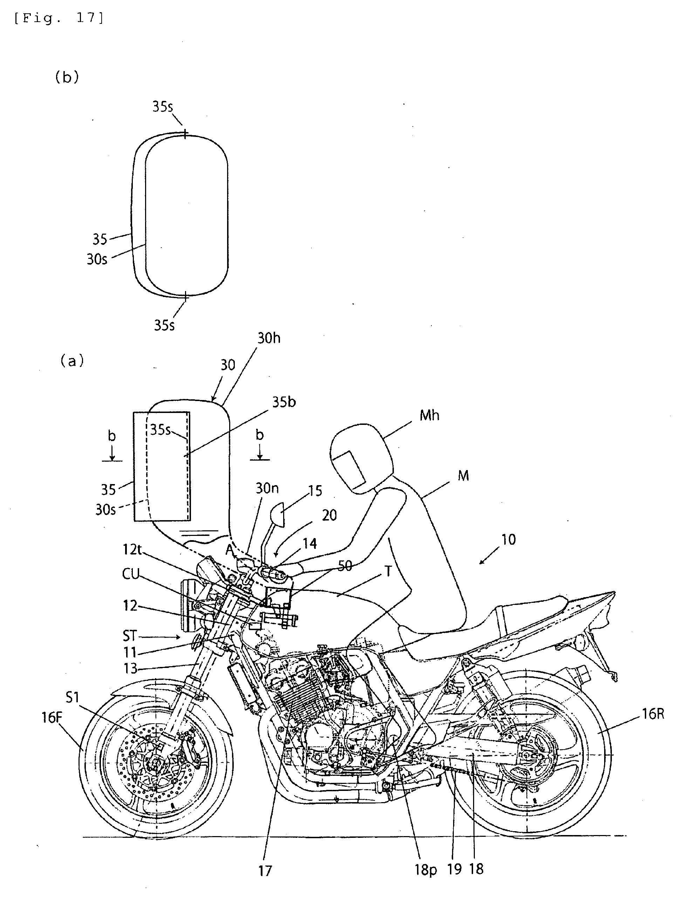

Fig. 17(a) is a side view showing a saddle-ride type vehicle using a further embodiment of the airbag, and Fig. 17(b) is a sectional view taken along line b-b in Fig. 17(a).

This embodiment is different from the above-mentioned embodiments, in that a protective sheet 35 for protecting a surface 30s is provided on an airbag 30, and that the protective sheet is loose compared with the surface 30s of the airbag 30.

As a result, as the protective sheet 35 for protecting the surface 30s of the airbag 30 is provided with the protective sheet loosened (compared with the surface 30s of the airbag 30), little or no tension is caused on the protective sheet 35 when the airbag 30 is inflated and deployed.

Accordingly, even if a sharp body hits the protective sheet 35, the protective sheet 35 is hardly damaged. When the sharp body (not shown) hits the airbag 30, it hits via the protective sheet 35 and as the protective sheet 35 is hardly damaged, external force applied to the airbag 30 by the sharp body acts on the airbag with the external force buffered by the protective sheet 35. Accordingly, the airbag 30 is also hardly damaged.

Accordingly, even if the airbag 30 is pressed on the side (or other part) of a vehicle C during a collision with the vehicle C as shown in Fig. 7 for example, the airbag 30 is hardly damaged and a function of the airbag for protecting a rider M is secured.

As is clear from the above-mentioned description, according to this embodiment, the airbag can be effectively protected without using a very strong sheet, compared with a case where the protective sheet is closely provided to the surface of the airbag 30.

Accordingly, according to this embodiment, as the airbag can be protected without requiring a thick sheet and a firm stitch, a smaller airbag system suitable for a saddle-ride type vehicle 10 can be provided.

If only the protective sheet 35 is a sheet having strength at which the above-mentioned protecting function can be fulfilled, a sheet made of arbitrary material can be adopted. For example, well-known foundation cloth forming the airbag 30 can be used for the protective sheet 35. However, if the protective sheet 35 having higher tolerance to incision is used, the airbag system can be reduced in weight and size.

As for means for providing the protective sheet 35 on the surface 30s of the airbag 30, the protective sheet 35 has only to be able to be provided with the protective sheet loosened and suitable means can be adopted.

For example, as shown in Figs. 17, both sides 35b of the protective sheet 35 can be joined to the airbag 30 (a joined part is shown by a reference sign 35s).

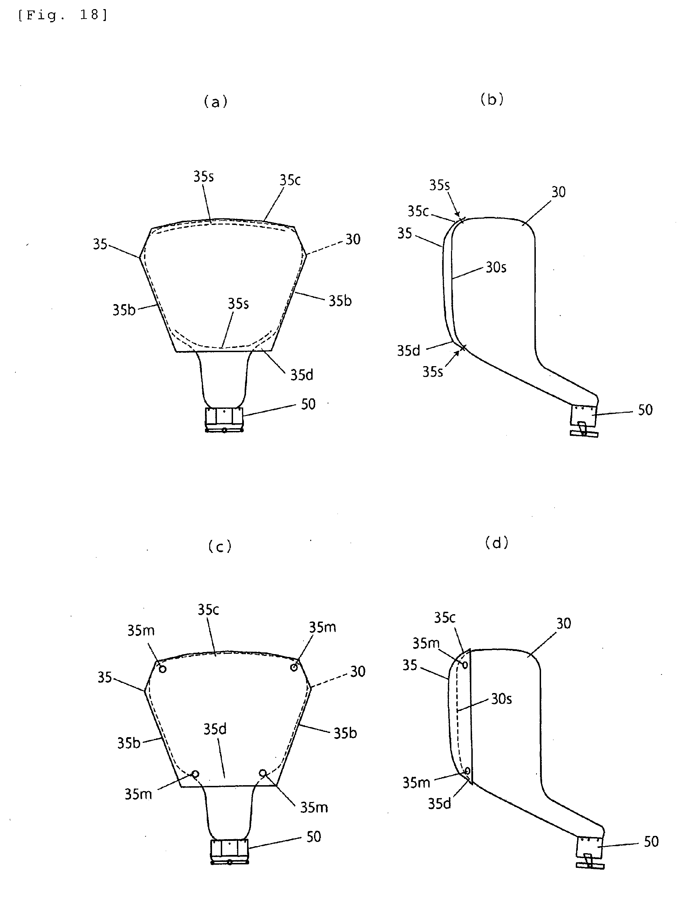

As shown in Figs. 18(a) and 18(b), an upper edge 35c and a lower edge 35d of the protective sheet 35 can be joined to the airbag 30.

Further, as shown in Figs. 18(c) and 18(d), the periphery of the protective sheet 35 can be connected to the airbag 30 at particular locations (at four corners in a case shown in Figs. 18(c) and 18(d)) on the periphery of the protective sheet 35. A connected part is shown by a reference sign 35m. The connected part 35m can be connected by joining, and can be also connected by welding and adhesion.

When the periphery of the protective sheet 35 is connected to the airbag 30 at particular locations as described above, the bulk of the connected part is reduced and housing size can be minimized.

Welding and adhesion can be used in place of joining 35s.

Even if the above-mentioned any connecting means is used, the protective sheet 35 is provided on the surface 30s of the airbag 30 with the protective sheet loosened by connecting the airbag 30 and the protective sheet 35 in connected parts so that the protective sheet 35 connected to the airbag in the connected parts is longer than the airbag, compared with the distance of the surface 30s of the airbag.

The protective sheet 35 can prevent the airbag 30 from being torn, reducing the housing size of the airbag 30 and the protective sheet 35 by providing the protective sheet only on the front side of the airbag 30 as shown in Figs. 17.

Various embodiments of the present invention have been described. However, the present invention is not limited to the above-mentioned embodiments and can be suitably embodied in a range of the essential points of the present invention. The above-mentioned embodiments may be also combined.

## Claims

1. An airbag system (20) for a saddle-ride type vehicle (10) comprising:
an airbag (30) to be inflated and deployed in front of a rider (M),
wherein the inside of the airbag is divided into a plurality of expansion chambers (31f, 31r) in a longitudinal direction of the vehicle (10), which chambers (31r, 31f) have differing internal pressure when the airbag (30) is inflated and deployed.

2. The airbag system according to Claim 1, wherein the internal pressure of the rearmost expansion chamber (31r) is reduced in comparison to the internal pressure of the front expansion chamber (31f).

3. An airbag system according to Claim 1 or 2, wherein an inflator (32) is provided for each of the plurality of expansion chambers (31f, 31r), the inflators (32f, 32r) having differing outputs, and the plurality of expansion chambers is inflated and deployed by each inflator.

4. An airbag system according to any one of Claims 1 to 3, wherein each of the plurality of expansion chambers (31f, 31r) has a vent hole (30vf, 30vr) of differing area, so as to differentiate the internal pressure in the chambers when the airbag is in inflated and deployed.

5. An airbag system according to any one of Claims 1 to 4, wherein the plurality of expansion chambers (31f, 31r) have differing volumes, and an inflator (32) having the same output is provided for each expansion chamber.

6. A saddle-ride type vehicle (10) with an airbag system (20) as claimed in any preceding claim.
